# EUROPÄISCHE PATENTSCHRIFT

(11) **EP 2 043 110 B1**
(45) Veröffentlichungstag und Bekanntmachung des Hinweises auf die Patenterteilung: **15.03.2017**
(21) Anmeldenummer: 08016617.6
(22) Anmeldetag: 22.09.2008
(51) Int. Cl.: H01B 3/00, H01B 1/02, H01C 7/00, G01K 7/18

(54) **Manteldraht und Schichtwiderstand**
Sheath wire and sheet resistance
Fil gainé et résistance de couche

(30) Priorität: 28.09.2007 DE 102007046907
(43) Veröffentlichungstag der Anmeldung: 01.04.2009
(73) Patentinhaber: HERAEUS SENSOR TECHNOLOGY GMBH, D-63450 Hanau (DE)
(72) Erfinder: Zinkevich, Matsvei, Dr., 63773 Goldbach (DE)
(74) Vertreter: Heraeus IP

(56) Entgegenhaltungen:
- EP-A- 0 772 031
- EP-A- 0 964 230
- EP-A- 1 308 967
- DE-A1- 3 115 656
- DE-A1- 4 125 980

## Beschreibung

Die vorliegende Erfindung betrifft Schichtwiderstände und Verfahren zu deren Herstellung. Schichtwiderstände im Sinne der vorliegenden Erfindung können ein Widerstandsmuster auf einer elektrisch isolierenden Oberfläche eines Substrats, wobei das Widerstandsmuster mit einer Glasabdeckung abgedeckt ist und mit Anschlussdrähten elektrisch verbunden ist, umfassen, wobei die Anschlussdrähte aus der Glasabdeckung ragen.

Insbesondere sind die Anschlussdrähte mit der Glasabdeckung mechanisch fixiert. Die Glasabdeckung wird durch Auftrag von Glaspaste und deren Einbrennen auf dem Untergrund ausgeführt. Einzelanfertigungen sind für die Massenproduktion aufwendig. Wenn mehrere Schichtwiderstände auf einem gemeinsamen Substrat gemeinsam verglast werden, können die Schichtwiderstände abschließend durch Sägen vereinzelt werden.

Gemäß der Heraeus-Broschüre "Keramik- und Glas-Meßwiderstände / Schicht-Widerstände / Prüf-Widerstandsthermometer" (PTM-W2) sind Schichtwiderstände mit platinüberzogenen Anschlussbeinen aus Nickel bekannt. Derartige Schichtwiderstände sind für Hochtemperaturanwendungen zwischen 400°C und 1000°C konzipiert.

Die Druckschrift DE 41 25 980 A1 beschreibt die Herstellung eines elektrischen Anschlussleiters für Schichtwiderstände, wobei der Anschlussleiter einen Kern aus Nickel oder einer Wolfram-Palladium Legierung aufweist, und einen Mantel, aus Platin oder einer Platinlegierung.

Die Aufgabe der vorliegenden Erfindung besteht darin, ein weiter vereinfachtes Verfahren für die Massenproduktion bereitzustellen. Insbesondere soll bei Aufrechterhaltung der mit dem Platinmantel bezweckten Schutzeigenschaften das Anlöten der Anschlussdrähte vereinfacht werden.

Die Lösung der Aufgabe erfolgt mit den Merkmalen der unabhängigen Ansprüche. Die abhängigen Ansprüche beschreiben bevorzugte Ausführungen.

Erfindungsgemäß wurde erkannt, dass Drähte aus Silber oder Silberlegierung den Messwiderstand beeinträchtigen würden, nicht aber Drähte aus einem Nickelkern mit einem dünnen Silbermantel. Der Silbermantel wiederum ermöglicht die Anwendung von Weichlot zur Befestigung des Schichtwiderstands an seinem dem Messwiderstand abgewandten Ende. In bevorzugter Ausführung wird erfindungsgemäß ein mit Silber ummantelter Nickeldraht durch Thermokompression über ein Anschlussfeld (Pad) mit dem Messwiderstand verbunden. Hierauf erfolgt eine Glasbeschichtung gegebenenfalls in Dünnschichttechnik, auf der eine Glaspaste aufgetragen wird. Die Glaspaste wird zu einem porösen Körper gesintert. Abschließend werden die Messwiderstände durch Auseinanderbrechen der Glaspaste, insbesondere an Sollbruchstellen, vereinzelt.

Vorzugsweise wird der Draht so erhitzt, dass sich um den erhitzten Draht eine Glasschicht bildet. Auch eine Beschichtung des Drahtes, insbesondere eine Dünnschichtbeschichtung, ist geeignet, um die Festigkeit der Verbindung des Drahtes mit dem Messwiderstand und der Glasur zu steigern.

Zur Beschichtung eignen sich besonders wirksam nicht flüchtige anorganische Komponenten wie Keramik oder Metall, insbesondere Glas.

Es werden Anschlussdrähte mit einem Nickelkern und einem Silbermantel be-reitgestellt. Der Anschlussdraht mit einem Silbermantel kann direkt mit dem Mantel gelötet werden, wobei die Kontaktstelle keinen Qualitätsverlust des Anschlussdrahtes durch Legierungsbildung zwischen Silber und Nickel erleidet. Damit wird die Fertigung von Schichtwiderständen hoher Qualität maßgeblich vereinfacht.

Bei einem Manteldraht mit einem Kern auf Nickelbasis bleiben dessen Kern und Mantel beim Löten mit Weichlot als separate Phasen erhalten, insbesondere wenn der Manteldraht einen Mantel auf Silberbasis aufweist.

Man kann den Silbermantel mit einem inerten Material wie Glas, insbesondere Quarzglas oder Keramik, insbesondere Aluminiumoxid strecken. Vorzugsweise weist der Silbermantel oder dessen Silberphase eine Reinheit von mindestens 99 Gew.-% auf. Gleichfalls kann der Kern mit inertem Material gestreckt sein. Vorzugsweise weist der Nickelkem oder dessen Nickelphase eine Reinheit von mindestens 99 Gew.-% auf.

Somit bleibt bei einem Mantel, der aus Silber oder Glas oder Keramik oder einer Mischung davon dessen Kernmaterial beim Löten mit Weichlot als separate Phase erhalten. Da Silber keinesfalls den Messwiderstand vergiften darf, wird der Silbermantel bedeutend dünner ausgeführt als der Nickelkern, insbesondere um mindestens eine Größenordnung, vorzugsweise um mindestens zwei Größenordnungen.

Ein Nickelkern mit einem Durchmesser von 100 bis 400 µm und ein 0,2 bis 20 µm, insbesondere 1 bis 5 µm dicker Silbermantel sind erfindungsgemäße Dimensionierungen. Zu deren Herstellung kann ein 100 µm bis 400 µm dicker Nickeldraht galvanisch mit Silber beschichtet werden. Insbesondere wird auf den Nickeldraht galvanisch Silber mit einer Manteldicke von 0,5 bis 1 µm aufgetragen.

Bei der Herstellung eines erfindungsgemäßen Schichtwiderstands mit einem Manteldraht, verbleiben beim Verbinden des Manteldrahtes mit dem Pad des Schichtwiderstand-Rohlings der Mantel und der Kern als separate Phasen.

Ein Schichtwiderstand mit einem Platin-Messwiderstand auf einem elektrisch isolierenden Substrat und mit dem Messwiderstand verbundene Manteldrähte als Anschlussdrähte, die einen ummantelten Nickelkern aufweisen, wird erfindungsgemäß mit dem Mantel aus Silber oder Glas oder Keramik oder einer Mischung davon ausgeführt.

Insbesondere bleibt der Mantel des Anschlussdrahtes im Bereich der Kontaktierung trotz der Thermokompression mit dem Messwiderstand als Phase gegenüber dem Kern des Anschlussdrahtes erhalten. Hierzu weist der Silbermantel oder die Silberphase oder der Nickelkern vorzugsweise eine Reinheit von mindestens 99 Gew.-% auf. Damit weist der Schichtwiderstand einen ummantelten Anschlussdraht auf, dessen Mantel bezüglich seiner elektrischen Leitfähigkeit und hinsichtlich seiner mechanischen Eigenschaften nicht durch Diffusion des Kemmaterials gefährdet ist.

In einer hochwertigen Ausführung sind der Messwiderstand und die Anschlussdrähte im Bereich ihres an dem Messwiderstand befestigten Endes mit Glas oder Glaskeramik abgedeckt. Ein Schichtwiderstand, umfassend eine elektrisch isolierende Oberfläche eines Substrates, eine auf der elektrisch isolierenden Oberfläche angeordnete Leiterbahn, zwei mit der Leiterbahn verbundene Nickeldrähte und eine die Leiterbahn und die mit der Leiterbahn verbundenen Drahtenden versiegelnde Glasabdeckung, weist eine dünne Glas- oder Metallbeschichtung insbesondere aus Platin oder Silber auf dem Draht auf und eine darüber dick aufgetragene Glaskomponente.

Insbesondere weist dessen Glasur eine erste, direkt auf der Metalloberfläche des Drahtes dünn angeordnete Komponente auf und eine darauf dick aufgetragene Hauptkomponente.

Die Nickeloxid-Schichtdicke auf dem Nickeldraht beträgt vorzugsweise weniger als 1 µm, insbesondere weniger als 100 nm.

In einer besonders stabilen Ausführung wird auf dem Anschlussdraht, der mit einer auf einem elektrisch isolierenden Substrat angeordneten Leiterbahn verbunden ist, eine Metall- oder Glaskomponente dünn aufgetragen und darauf eine Glaspaste dick aufgetragen und eingebrannt. Es ist auch möglich, den Anschlussdraht in einem Glas aufweisenden Medium zu erhitzen, bis sich um diesen eine Glasschicht ausgebildet hat.

Erfindungsgemäß wird es ermöglicht, mehrere gemeinsam verglaste Schichtwiderstände durch Brechen zu vereinzeln. Dies vereinfacht die Herstellung von Schichtwiderständen aus mindestens einem Widerstandsmuster auf elektrisch isolierender Oberfläche eines Substrats mit einem abgedeckten Widerstandsmuster und mit Glas zugentlasteten Anschlussdrähten, die mit dem Widerstandsmuster elektrisch leitend verbunden sind.

In bevorzugter Ausführung wird der an der Kontaktstelle befestigte Silberdraht mit Glas ummantelt, insbesondere in Dünnschichttechnik. Es wird dann erst der mit Glas ummantelte Draht durch Auftrag und Einbrennen einer Glaspaste zugentlastet. Bei dieser Technik wird die bekannte Blasenbildung bei der Anwendung von Glas zur Zugentlastung der Anschlussdrähte vermieden.

In einer besonders einfachen Ausführung sind Nickeldrähte mit einem Glasmantel versehen. Der Glasmantel schützt die Drähte vor Korrosion und ermöglicht ein blasenfreies Fixieren zur Zugentlastung mit einer Glaspaste. Mit der dünnen Glasschicht werden Oxidschichten der Lotstelle leichter aufgekratzt oder aufgebrochen. Die spätere Lotstelle an sich ist vergleichbar einer Cermet-Mischung und im Bereich der Lotstelle unempfindlicher gegen Spannungen, die wegen der unterschiedlichen Ausdehnungskoeffizienz auftreten, als die klassisch mit einem äußeren Glastropfen zugentlasteten metallischen Lotverbindungen. Die ausgezeichnete Stabilität der erfindungsgemäßen Schichtwiderstände erlaubt deren Vereinzeln durch Auseinanderbrechen. Es lässt sich damit auf einer Substratplatte eine Vielzahl von Schichtwiderständen gleichzeitig herstellen, insbesondere mit einem gemeinsamen Auftrag der zugentlastenden Glaspaste. Für das Auseinanderbrechen werden Sollbruchstellen eingeführt, insbesondere durch Anritzen des Substrats. Das abschließende Auseinanderbrechen zum Vereinzeln der Schichtwiderstände ist eine enorme Verfahrenserleichterung gegenüber der bisherigen Vereinzelung durch Sägen.

Im Folgenden wird die vorliegende Erfindung mit Bezug auf die Zeichnungen verdeutlicht. Die Figuren 1 bis 5 zeigen:
- Figur 1: einen Nickel-Silber-Manteldraht;
- Figur 2: einen Schichtwiderstands-Rohling mit Nickel-Silber-Manteldraht;
- Figur 3: einen Schichtwiderstands-Rohling mit Silbermantel-Nickeldrähten mit einer Dünnschicht-Beschichtung aus einem Quarzglas oder Al2O3;
- Figur 4: den mit einem blasenfreien Zugentlastungstropfen hergestellten Schichtwiderstand;
- Figur 5: eine Vielzahl von gemeinsam auf einer Platte hergestellten Schichtwiderstände vor deren Vereinzeln und die dafür hinreichen Sollbruchstellen zum Auseinanderbrechen.

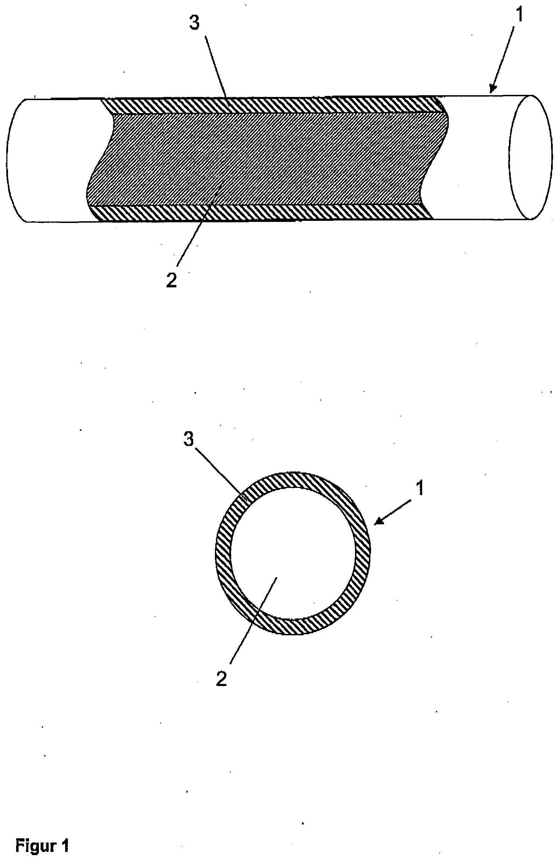

Ein Manteldraht 1 gemäß Figur 1 mit einem Nickelkern 2 und einem Silbermantel 3 erfährt weder während des Herstellprozesses des Drahtes oder des Schichtwiderstands, noch während der Anwendung des Schichtwiderstandes eine Qualitätsverschlechterung infolge Ausbildung intermetallischer Phasen, da Silber und Nickel miteinander nicht zur Ausbildung intermetallischer Phasen neigen. Die Ausbildung intermetallischer Phasen ist ein häufig beobachtetes Problem an Lötstellen und wird erfindungsgemäß vermieden. Problematisch sind einerseits insbesondere durch Phasenwachstum die zunehmende Materialermüdung und andererseits die abnehmende Leitfähigkeit. Mit dem erfindungsgemäßen Draht treten diese Probleme erfindungsgemäß nicht auf. Die Probleme treten ebenfalls nicht auf, wenn der Mantel 3 zusätzlich Glas oder Keramik aufweist oder nur aus Glas oder Keramik oder einer Mischung davon besteht. Hierin unterscheiden sich die erfindungsgemäßen Manteldrähte 1 von herkömmlichen Platin-Nickel-Drähten, bei denen das Nickel in das Platin diffundiert und dabei die guten Eigenschaften des Platins verschlechtert. Es bleibt damit die Funktion des Mantels sowohl beim Anlöten des Manteldrahtes als auch bei dessen Anwendung als Schichtwiderstand erhalten.

Dies ermöglicht die erfindungsgemäßen Ausführungen des Manteldrahts 1 mit einem Silbermantel 3 oder einem Glasmantel 3 oder einem Keramikmantel 3 und ebenfalls Kombinationen davon wie beispielsweise einen Mantel 3 aus Silber-Cermet oder einem mit Silber dotierten Glas. Weiter bevorzugt sind Mäntel 3 aus einem Verbund aus Silber, Glas oder Keramik und Mäntel 3 aus Glaskeramik oder mit Glas, Glaskeramik oder Keramik ummantelte Silbermantel-Nickeldrähte.

Manteldrähte 1 gemäß Figur 1, die zusätzlich mit Glas oder Keramik ummantelt sind, insbesondere mit einer zusätzlichen Dünnschicht 6 ummantelt sind, gestatten nach der Thermokompression eine blasenfreie Zugentlastung 7 mit Glas. Insbesondere der Auftrag einer SiO₂- oder Al₂O₃-Dünnschicht 6 bietet einen hervorragenden Schutz vor etwaigen Reaktionen der Glasschmelze beim Einbrennen des Zugentlastungstropfens.

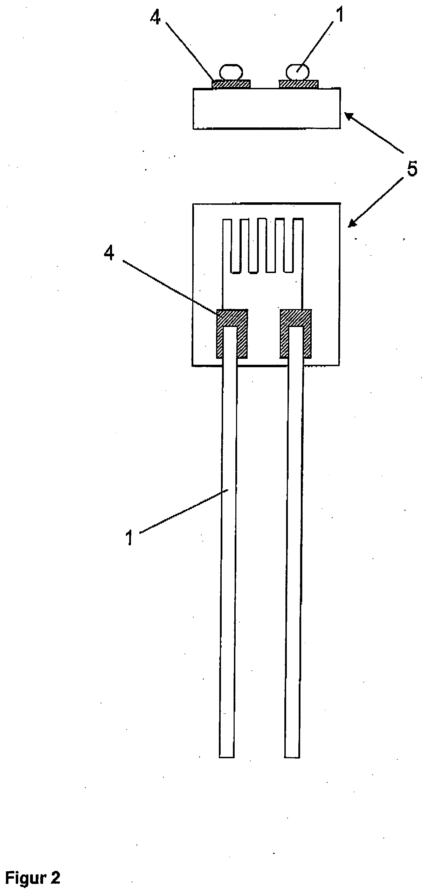

In Figur 2 ist der Manteldraht 1 gemäß Figur 1 auf ein Pad 4 an einem Messwiderstand eines Schichtwiderstand-Rohlings 5 angelötet

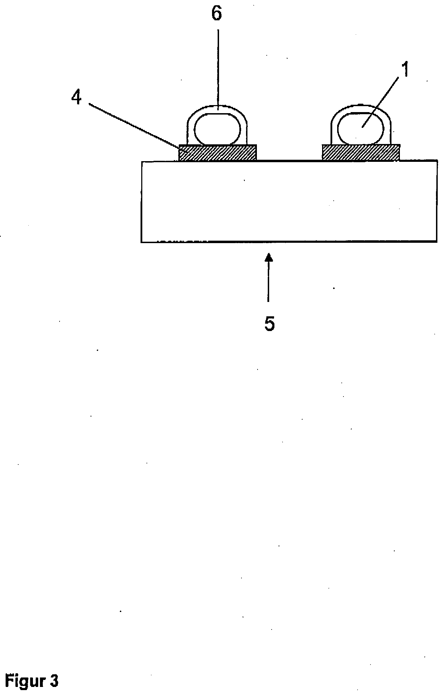

In einer hochwertigen Ausführung nach Figur 2 wird ein auf dem Pad 4 befestigter Silbermantel-Nickeldraht 1 mit Glas oder Keramik zu einem Rohling 5 gemäß Figur 3 beschichtet.

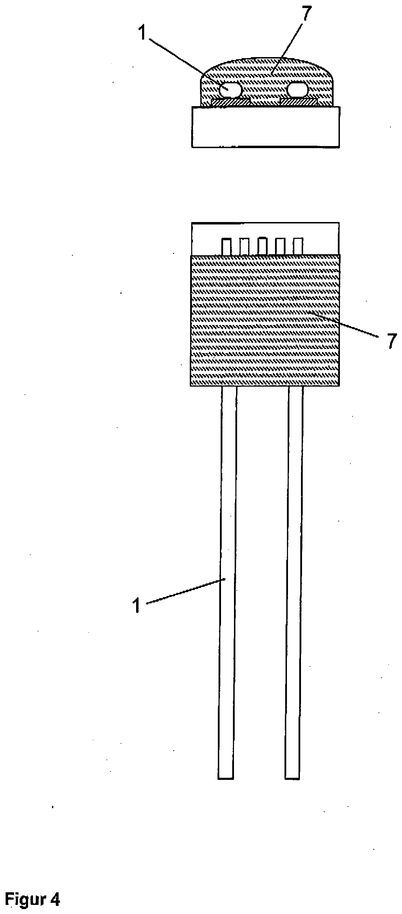

In einer einfachen Ausführung gemäß Figur 2 wird ein am Pad 4 angelöteter Nickeldraht 1 mit Glas oder Keramik in Dünnschichttechnik zu einem Rohling 5 gemäß Figur 3 ummantelt. Vorteilhafterweise wird ein Substratplättchen mit einer Vielzahl an Schichtwiderstands-Rohlingen 5 mit Glas oder Keramik beschichtet. Hierauf erfolgt der Auftrag einer Glaspaste zur Zugentlastung 7 zu einem Schichtwiderstands-Rohling gemäß Figur 4, wobei nach dem eindungsgemäßen Verfahren die Ausbildung von Blasen an den Anschlussdrähten vermieden wird.

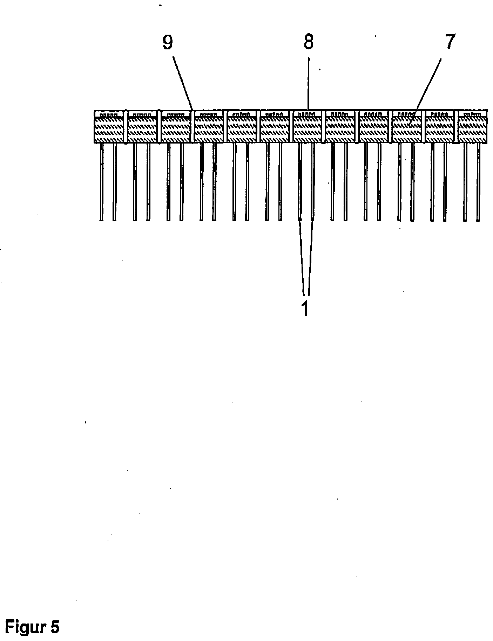

Die Herstellung von Schichtwiderständen 8 erfolgt auf Platten, die als Substrat für eine Vielzahl von Schichtwiderständen 8 verwendet werden. Die einzelnen Verfahrensschritte zur Herstellung von Schichtwiderständen 8 können deshalb parallel für eine Vielzahl von Schichtwiderständen 8 ausgeführt werden. Insbesondere kann dabei ein gemeinsamer Dünnschichtauftrag zur Ummantelung der angelöteten Anschlussdrähte mit Glas oder Keramik gemeinsam durchgeführt werden. Vorzugsweise werden Sollbruchstellen 9 gemäß Figur 5 erstellt, damit die Schichtwiderstände 8 zum Vereinzeln leichter brechbar sind.

## Patentansprüche

1. Schichtwiderstand (8), enthaltend einen Platin-Messwiderstand auf einem elektrisch isolierenden Substrat und mit dem Messwiderstand verbundene Anschlussdrähte (1), die einen ummantelten Nickelkern (2) aufweisen, wobei der Mantel (3) aus Silber oder einer Mischung aus Silber mit Glas oder Keramik besteht.

2. Schichtwiderstand (8) nach Anspruch 1, **dadurch gekennzeichnet, dass** der Silbermantel (3) oder die Silberphase der Mischung oder der Nickelkern eine Reinheit von mindestens 99 Gew.-% aufweist.

3. Schichtwiderstand (8) nach Anspruch 1 oder 2, **dadurch gekennzeichnet, dass** der Nickelkern (2) einen Durchmesser von 100 µm bis 400 µm aufweist und der Silbermantel (3) 0,2 bis 5 µm dick ist.

4. Schichtwiderstand (8) nach einem der Ansprüche 1 bis 3 **dadurch gekennzeichnet, dass** der Messwiderstand und die Anschlussdrähte im Bereich ihres an dem Messwiderstand befestigten Ende mit Glas oder Glaskeramik abgedeckt sind.

5. Schichtwiderstand, insbesondere nach einem der Ansprüche 1 bis 4 umfassend eine elektrisch isolierende Oberfläche eines Substrates, eine darauf angeordnete Leiterbahn, zwei mit der Leiterbahn verbundene Anschlussdrähte (1) und eine die Leiterbahn und die mit der Leiterbahn verbundenen Drahtenden versiegelnde Glasabdeckung (7), **dadurch gekennzeichnet, dass** die Anschlussdrähte (1) einen Nickelkern (2) und einen Silbermantel (3) aufweisen.

6. Verfahren zur Herstellung von Schichtwiderständen (8) aus mindestens einem Widerstandsmuster auf elektrisch isolierender Oberfläche eines Substrats, eine das Widerstandsmuster bedeckende Glasabdeckung (7) und aus der Glasabdeckung (7) ragende Anschlussdrähte (1), die mit dem Widerstandsmuster elektrisch leitend verbunden sind und einen Nickelkern, sowie einen Mantel, der aus Silber oder einer Mischung aus Silber mit Glas oder Keramik besteht, aufweisen, wobei mehrere gemeinsam verglaste Schichtwiderstände (8) durch Brechen vereinzelt werden.

7. Verfahren zur Herstellung eines Schichtwiderstands (8) mit einem Messwiderstand und daran angeschlossenen Manteldraht (1) nach einem der Ansprüche 1 bis 5, wobei der Manteldraht (1) durch Thermokompression mit den Kontaktflächen (4) der Widerstandsschicht elektrisch leitend verbunden wird.

8. Verfahren zum Abschließen eines Schichtwiderstands (8) mit einem Draht (1) , wobei der aus dem Messwiderstand ragende Draht einen Nickelkern (2) und einen Mantel (3) aus Silber oder einer Mischung aus Silber mit Glas oder Keramik aufweist und mit Weichlot gelötet wird.

9. Verfahren nach Anspruch 8 **dadurch gekennzeichnet, dass** der Manteldraht (1) ohne Flussmittel mit Weichlot gelötet wird.

## Claims

1. Sheet resistor (8), containing a platinum measuring resistor on an electrically insulating substrate and connecting wires (1) that are connected to the measuring resistor and comprise a jacketed nickel core (2), whereby the jacket (3) consists of silver or a mixture of silver and glass or ceramics.

2. Sheet resistor (8) according to claim 1, **characterised in that** the silver core (3) or the silver phase of the mixture or the nickel core has a purity of at least 99% by weight.

3. Sheet resistor (8) according to claim 1 or 2, **characterised in that** the nickel core (2) has a diameter of 100 µm to 400 µm and the silver jacket (3) is 0.2 to 5 µm in thickness.

4. Sheet resistor (8) according to any one of the claims 1 to 3, **characterised in that** the measuring resistor and the region of the end of the connecting wires attached to the measuring resistor are covered by glass or glass ceramics.

5. Sheet resistor, in particular according to any one of the claims 1 to 2, comprising an electrically insulating surface of a substrate, a printed conductor arranged thereon, two connecting wires (1) that are connected to the printed conductor, and one glass cover (7) that seals the printed conductor and the wire ends connected to the printed conductor, **characterised in that** the connecting wires (1) comprise a nickel core (2) and a silver jacket (3).

6. Method for producing sheet resistors (8) made of at least one resistor pattern on electrically insulating surface of a substrate, a glass cover (7) covering the resistor pattern and connecting wires (1) that project from the glass cover (7) and are connected to the resistor pattern in electrically conductive manner and comprise a nickel core as well as a jacket consisting of silver or a mixture of silver and glass or ceramics, whereby multiple jointly vitrified sheet resistors (8) are individualised by fracturing.

7. Method for producing a sheet resistor (8) with a measuring resistor and jacket wire (1) connected to it according to any one of the claims 1 to 2, whereby the jacket wire (1) is connected to the contact surfaces (4) of the resistor layer in electrically conductive manner by thermo-compression.

8. Method for connecting a sheet resistor (8) to a wire (1), whereby the wire projecting from the measuring resistor comprises a nickel core (2) and a jacket (3) made of silver or a mixture of silver and glass or ceramics, and is being soldered by means of soft solder.

9. Method according to claim 8, **characterised in that** the jacket wire (1) is being soldered with soft solder without soldering flux.

## Revendications

1. Résistance à couche (8) contenant une résistance de mesure en platine sur un substrat à isolation électrique et avec des fils de connexion (1) reliés à la résistance de mesure qui présentent un noyau en nickel gainé (2), dans laquelle le gainage (3) se compose d'argent ou d'un mélange d'argent avec du verre ou de la céramique.

2. Résistance à couche (8) selon la revendication 1, **caractérisée en ce que** le gainage d'argent (3) ou la phase d'argent du mélange ou le noyau en nickel présente une pureté d'au moins 99 % en poids.

3. Résistance à couche (8) selon la revendication 1 ou 2, **caractérisée en ce que** le noyau en nickel (2) présente un diamètre de 100 µm à 400 µm et le gainage d'argent (3) est de 0,2 à 5 µm d'épaisseur.

4. Résistance à couche (8) selon une des revendications 1 à 3, **caractérisée en ce que** la résistance de mesure et les fils de connexion sont recouverts de verre ou de vitrocéramique dans la région de leur extrémité fixée à la résistance de mesure.

5. Résistance à couche, notamment selon une des revendications 1 à 4, comprenant une surface à isolation électrique d'un substrat, une piste conductrice disposée sur celle-ci, deux fils de connexion (1) reliés à la piste conductrice et un recouvrement de verre (7) scellant la piste conductrice et les extrémités de fil reliées à la piste conductrice, **caractérisée en ce que** les fils de connexion (1) présentent un noyau en nickel (2) et un gainage d'argent (3).

6. Procédé de fabrication de résistances à couche (8) à partir d'au moins un modèle de résistance sur une surface à isolation électrique d'un substrat, un recouvrement de verre (7) recouvrant le modèle de résistance et des fils de connexion (1) dépassant du recouvrement de verre (7) qui sont reliés de manière électriquement conductrice au modèle de résistance et présentent un noyau en nickel ainsi qu'un gainage qui se compose d'argent ou d'un mélange d'argent avec du verre ou de la céramique, dans lequel plusieurs résistances à couche (8) vitrifiées ensemble sont séparées par cassure.

7. Procédé de fabrication d'une résistance à couche (8) avec une résistance de mesure et un fil de gainage (1) connecté à celle-ci selon une des revendications 1 à 5, dans lequel le fil de gainage (1) est relié de manière électriquement conductrice par thermocompression aux faces de contact (4) de la couche de résistance.

8. Procédé de connexion d'une résistance à couche (8) à un fil (1), dans lequel le fil dépassant de la résistance de mesure présente un noyau en nickel (2) et un gainage (3) en argent ou un mélange d'argent avec du verre ou de la céramique et est brasé avec du brasage tendre.

9. Procédé selon la revendication 8, **caractérisé en ce que** le fil de gainage (1) est brasé avec du brasage tendre sans fondant.
